# EUROPEAN PATENT SPECIFICATION

(11) **EP 0 838 657 B1**
(45) Date of publication and mention of the grant of the patent: **25.06.2003**
(21) Application number: 97308269.6
(22) Date of filing: 17.10.1997
(51) Int. Cl.: G01B 5/02

(54) **Apparatuses and method for measuring the length of elongate flexible objects**
Vorrichtungen und Verfahren zur Messung der Länge von länglichen flexiblen Objekten
Dispositifs et procédé pour la mesure de la longeur d'objets allongés

(30) Priority: 28.10.1996 US 738800
(43) Date of publication of application: 29.04.1998
(73) Proprietor: Cooper Tire & Rubber Company, Findlay Ohio 45840 (US)
(72) Inventor: Malik, Richard, Rossford, Ohio 43460 (US)
(74) Representative: Warren, Anthony Robert

(56) References cited:
- US-A- 3 328 885
- US-A- 4 562 743
- US-A- 4 604 813
- US-A- 5 097 617

## Description

This invention is related to length measurement of elongate flexible parts. Accurate length measurements of e.g. extruded rubber seals are required for production control data collection, capability studies, and shrinkage studies. These seals are long flexible extruded parts having a variety of cross-sectional configurations, generally in length up to 6.1 m (twenty feet) or more. After extrusion, the seals are placed onto a measurement fixture or gauge, and an overall length measurement is recorded.

One of the problems with accurately measuring the overall length of such extruded rubber seals is the variation caused by handling the part. Typically, one end of a long part is placed against an end stop in the measurement fixture (such as an aluminium angle or channel, or on a flat wooden boundary board with attached scale) and straightened to extend to its full length where a measurement is recorded. Errors in length measurement will occur if the part is not perfectly straight on the fixture. Another major contributor to errors in measurement is the stretching or compressing (stuffing) of the extruded part while placing it into the measurement fixture. This can create localised tension or compression forces in the extrusion. The coefficient of friction between the typical measurement fixture and the various rubber compounds is high enough to allow a stretched or stuffed part to remain in that altered stage, e.g. such localised forces are not dissipated, while the part is being measured. If a part is not in its "free state" (not stretched or stuffed) when measured, variations and measurement errors will result.

A measurement fixture (on which the preambles of the independent claims are based) is disclosed in US 4562743. The fixture is for measuring the extension of a cable when subjected to tension. The fixture includes two pairs of rollers for supporting the cable between ends of the fixture. The cable extends in an unsupported manner between the ends of the fixture and the pairs of rollers and accordingly relies on tension in the cable to maintain the length of cable being measured in a straight line. This measuring fixture is accordingly not suitable for measuring the length of a flexible part which needs to be measured in a completely relaxed or untensioned state.

A further measurement fixture is described in US 4604813. The fixture includes two rotatable tables, the distance between which along a base can be varied by means of a screw threaded control means. The fixture is stated to be particularly suitable for measuring a length of a rigid pipe bent in three dimensions and is not suitable for measuring the length of a flexible part which cannot support itself.

A primary object of the invention, therefore, is to provide a method and apparatuses by which the length of elongate flexible parts can be measured accurately.

According to one aspect of the invention, there are provided novel roller measurement fixtures (as set out in the independent claims 1 and 4) designed to help eliminate both of the problems mentioned above (as set out in the independent apparatus claims). The fixtures are composed of a series of small in-line rollers mounted in one or more rows, forming a receiving cradle device, such that the part to be measured is cradled in a semi-circular arrangement and straightened as it settles under its own weight. The semi-circular cradle device will accommodate many different cross-sections of e.g. extruded seal. The fixtures also contain a scale, for example a stainless steel scale that is used as a means of acquiring the measurements.

The cradle is preferably comprised of a series of rows of in-line rollers which are free to rotate as the part is placed into the fixture and properly located. The friction from these rollers is negligible, therefore the part remains in, or attains, its free state, without internal stresses, throughout the loading and measurement process. Thus, it can be characterized that the extruded part is limp within the cradle, being loaded so as to contact a head or alignment stop at one end of the cradle.

A floating end stop, preferably with an integral pointer, rides in or along the part cradle, and is used to rest against the free end of the part to indicate the measurement on the scale attached to the fixture cradle.

From another aspect, the invention provides a method by which the length of a long flexible part may be measured (as set out in the independent method claim 3), which includes supporting the part at a large number of incremental locations along its length, each support being movable relative to the adjacent surfaces of the part so as to allow the part to straighten and to relax and dissipate any localized tension or compression forces in the part prior to taking the length measurement.

Reference will now be made to the accompanying drawings, in which:-
Figs. 1 and 2 are schematic diagrams of prior art measurement devices;
Fig. 3 is an end view of a measuring device incorporating a cradle embodying the invention, typically installed at the delivery end of an extrusion apparatus;
Fig. 4 is an enlarged and broken partial front view of the cradle;
Fig. 5 is an enlarged cross-sectional view of the cradle and the rollers, taken along line 5--5 in Fig. 4;
Fig. 6 is a plan view of the floating end stop; and
Fig. 7 is an end view of the floating end stop.

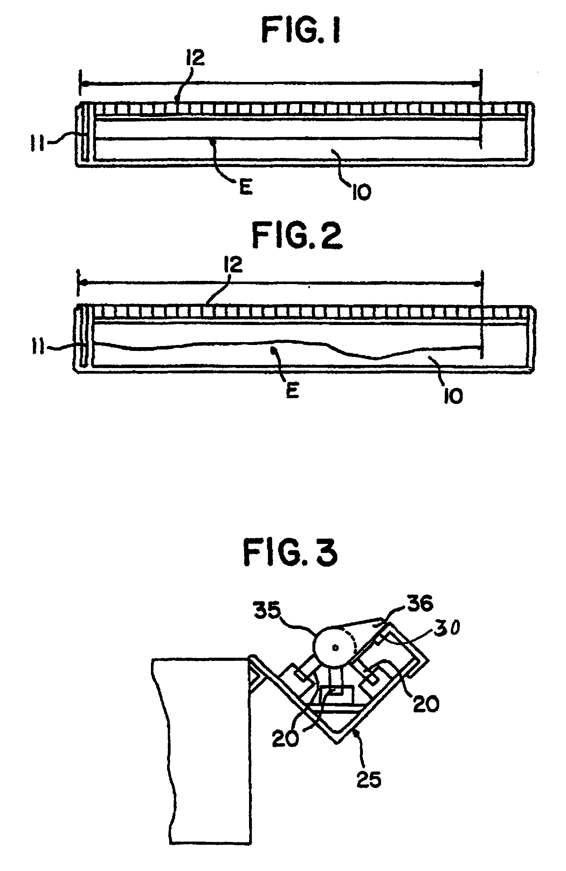

Fig. 1 illustrates schematically the prior manner of measuring long flexible rubber (or the like) extrusions, for example natural or synthetic foam rubber extrusions. Of particular interest are synthetic material extrusions used for weather stripping and sealing in automotive applications, such as around windows, in windows runs or channels, and around doors and trunk lids. These seals are extruded through a die to achieve the desired cross-sectional configuration, which is usually irregular, and cut to prescribed length.

Inspection of these extruded parts, particularly length measurement, is required to maintain uniformity and quality. Proper length is needed to avoid problems of installation on production lines. Both short and long extrusions present difficulties to the installer, who is working under time constraint. The cut parts E (lengths) are placed on a flat board 10 (Figs. I and 2), one end against a stop 11, and the length is noted on a rule 12 attached to the board. These parts are flexible and relatively small in cross-section and comparably quite long; for example, a particular extruded seal might be 3.8 cm (1.5 inches) across its greatest cross-section, and up to 6.1m (twenty feet) or more in length, i.e. a width-to-length ratio of the order of 1 :160 or more. The material is often sponge-like and in any event is easily subject to localized compression or tension as the part is manually laid out on board 10, due to its longitudinal resilience.

The coefficient of friction between the part and the board can result in internal localized stress (either compression or tension) which affects the true length ( when relaxed) of the part. Also, the part may be (hurriedly) not laid in a straight line, as illustrated in an exaggerated way in Fig. 2. All of these variations, caused in part by haste during the manufacturing operation, may result in parts of incorrect length measurement.

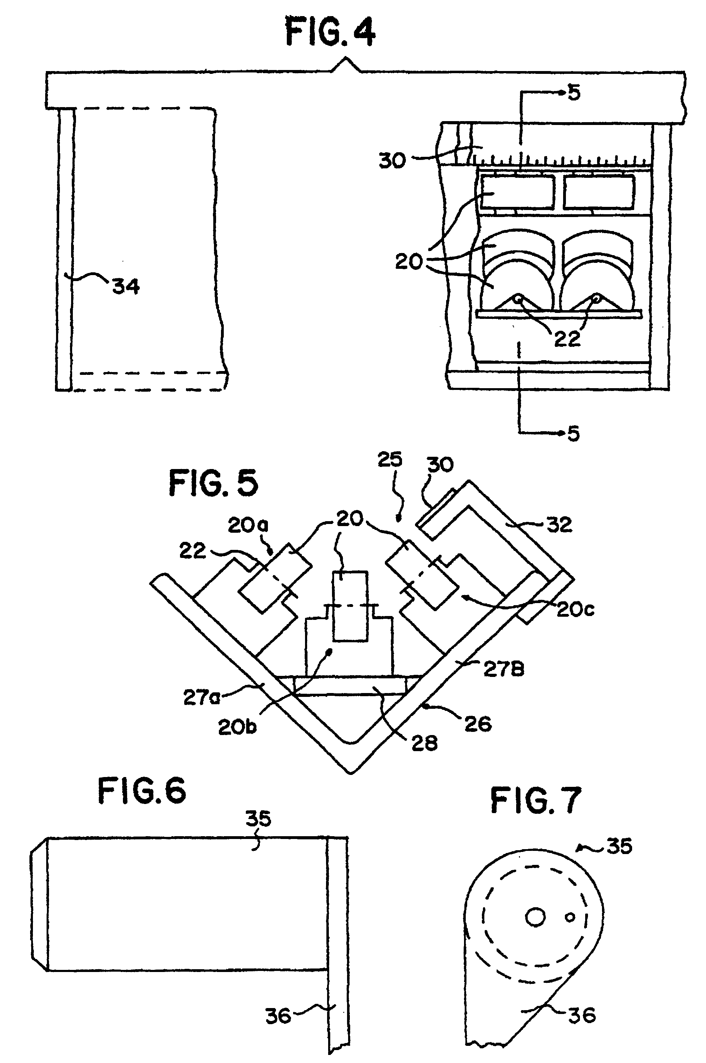

In accordance with one embodiment of the invention, a novel roller measurement fixture is provided to help eliminate both of the problems mentioned above. The fixture is comprised of a series of small in-line rollers 20, preferably having rims of like diameter, supported on small shafts 22 aligned in one or more rows 20A, 20B, 20C, within a trough 25 which is an open beam 26 having legs 27A, 27B preferably at right angles to each other, with a small shelf 28 secured across its bottom, at the joinder of the legs 27A, 27B forming a receiving cradle device. The cradle is preferably comprised of the three (or more) rows 20A, 20B, 20C of in-line rollers 20, the rollers of each of which rows are free to rotate on their respective support shafts 22 as the part is placed into the fixture through its open top (see Figs. 3 and 5) and properly located. The shafts are all mounted to extend transverse to the beam 26, and adjacent shafts in each row are spaced apart by a distance slightly greater than the diameter of the rollers whereby the circumferential rim surfaces or peripheries of the rollers facing upwardly in the cradle provide a large number of independent or discontinuous supports or segments for the part, both longitudinally and circumferentially of the part, and extending at least the full length of the part. The friction from these rollers is negligible; therefore the part remains in, or attains, its free state, without internal stresses, throughout the loading and measurement process.

Other forms and arrangements of rollers can be used. For example, the rollers can be a single set, each having a large convex peripheral configuration, or a larger number of rows of smaller rollers can be used. In an actual embodiment, three rows of rollers having a diameter of 2.54 cm (one inch) are provided, with their centers spaced apart 1.43 cm (9/16 inch). The rows extend along a cradle beam 6.1m (twenty feet) in length.

Thus, it can be characterized that the extruded part is limp within the cradle, and the extruded part to be measured is placed and held by gravity, cradled in a semi-circular arrangement of rollers (see Figs. 3 and 5), and will straighten as it settles under its own weight. Any tension or compression forces temporarily created in the part during handling will be relieved or dissipated, since each roller can move independently of the others, and each provides an incremental support of the part over a very short portion of its total length. The semi-circular arrangement of the rollers of the cradle device will accommodate many different cross-sections of extruded seal or other parts. The fixture includes a stainless steel scale 30 supported on a U-shaped member 32 (see Fig. 5) which is fastened to, and runs the length of leg 27B of beam 26, the scale being used as a means of acquiring the length measurements. The zero point of the scale is aligned with an end stop 34 at the head end of the fixture. A floating end stop 35 (see Figs. 3, 6 and 7) with an integral pointer 36 rides in and along the part cradle, being cylindrical in shape and simply slidably supported on rollers 20, This stop is used by rolling it against the free end of the part to indicate the part length measurement via the arm or pointer 36 extending toward scale 30.

While the method and the apparatuses herein described constitute preferred embodiments of this invention, it is to be understood that the invention is not limited to this precise method and apparatuses, and that changes may be made in either without departing from the scope of the invention, which is defined in the appended claims.

## Claims

1. A fixture for measuring the length of elongate flexible parts of different cross-sections, said parts being incapable of self-support in a straight line, comprising:
an elongated support means (25, 27);
a plurality of rollers (20) having rims of like diameter arranged along said support means to present a series of support surfaces; and
support shafts (22) for said rollers (20) extending through the axes of rotation of said corresponding rollers (20),
said shafts (22) extending parallel to each other and transversely of said support means (25, 27) whereby circumferential rim surfaces of said rollers facing upward in said support means provide a part support of discontinued segments of a full length of a flexible part placed on and extending along said fixture, **characterised in that**:
i) said fixture is for measuring extruded parts formed of foam rubber or like material;
ii) said support means comprises a cradle (27) including an upwardly open trough (25);
iii) said rims of said rollers (20) are aligned seriatim in said trough (25) whereby said support surfaces of said rims are arranged in a line;
iv) said shafts (22) are spaced apart a distance slightly greater than the diameter of said rollers (20); and
v) said fixture further includes a scale (30) attached to and extending along said trough (25), an end stop (34) at one end of said trough for indexing said part placed thereon, and a floating stop (35, 36) movable along said rollers into engagement with a free end of said part and cooperating with said scale (30) to indicate the length of said part,
wherein localised tension and compression of said part will dissipate due to said part being supported independently at relatively closely spaced increments along the length of said part.

2. A fixture as defined in claim 1 wherein
said trough (25) is formed by a beam (26) having an upwardly open top, a bottom, and opposed sides (27A, 27B), and
said rollers (20) are supported in alignment along said beam (26) from the bottom and sides thereof in at least three rows (20a, 20b, 20c) of aligned roller supports for confining said elongate flexible part therein.

3. A method of measuring the length of elongate flexible parts which are incapable of self-support in a straight line, comprising:
supporting a part in a substantially straight horizontal position at independent locations spaced lengthwise of said part, each support location being provided by a freely rotatable roller (20) aligned along a support means (25, 27) with axes (22) of said rollers being parallel and each said roller (20) being independently movable with respect to adjacent surface portions of said part, and
then measuring the length of said part,
**characterised in that**:
i) said method is for measuring the length of flexible extruded parts;
ii) said support means (25, 27) comprises a cradle (27);
iii) supporting said part comprises supporting it at closely spaced locations along its length by means of said rollers (20), said axes (22) of which are spaced apart a distance slightly greater than the diameter of said rollers (20); and
iv) said measuring step is performed with said part being in its relaxed state,
whereby said rollers allow said part to expand or contract locally due to the release of tension or compression localised in said part.

4. A fixture for measuring the length of an elongate part which is flexible so as to be incapable of self-support in a straight line, and is longitudinally resilient so as to be prone to changes in length, comprising:
an elongate support means (25, 27), a plurality of rollers (20) supported independently in said support means (25, 27) to present a plurality of support surfaces along the length of the part, said rollers being freely rotatable, and spaced apart in the longitudinal direction of said support means (25, 27),
support shafts (22) for said rollers (20),
said shafts (22)extending generally parallel to each other and generally transversely of said support means (25, 27),
whereby said rollers (20) provide support for said part when placed thereon, **characterised in that**:
i) said support means (25, 27) comprises a cradle (27) including an upwardly open trough (25);
(ii) said rollers (20) are supported seriatim and at relatively closely spaced intervals along the length of said part; and
iii) said fixture further includes a scale (30) attached to and extending along said trough (25), an end stop (34) at one end of said trough (25) for indexing said part placed thereon and a floating stop (35, 36) movable along said rollers (20) into engagement with a free end of said part and cooperating with said scale (30) to indicate the length of said part,
whereby said rollers (20) serve to dissipate localised tension and compression in said part, such dissipation being due to said part being supported independently at relatively closely spaced intervals along the length of said part.

5. A fixture as defined in claim 4 wherein
said trough (25) is formed by a beam (26) having an upwardly open top, a bottom and opposed sides (27A, 27B), and
said rollers (20) are supported in alignment along said beam from the bottom and sides thereof in at least three rows (20a, 20b, 20c) for confining said part therein.

## Patentansprüche

1. Eine Vorrichtung für die Messung der Länge von länglichen, flexiblen Teilen mit unterschiedlichem Querschnitt, wobei besagte Teile nicht in der Lage sind, sich in einer geraden Linie selbst zu stützen, umfassend:
ein längliches Stützmittel (25, 27);
eine Vielzahl von Rollen (20), welche Felgen mit gleichem Durchmesser aufweisen und entlang besagtem Stützmittel angeordnet sind, um eine Reihe von stützenden Oberflächen zur Verfügung zu stellen; und
Stützachsen (22) für besagte Rollen (20), welche sich durch die Rotationsachsen von besagten korrespondierenden Rollen (20) erstreckten,
wobei besagte Achsen (22) sich parallel zueinander und transvers zu besagten Stützmitteln (25, 27) erstrecken, wobei rundumlaufende Felgenoberflächen von besagten Rollen nach oben hin ausgerichtet sind, in besagtem Stützmittel, so dass sie einen Stützteil von diskontinuierlichen Segmenten einer gesamten Länge eines flexiblen Teiles ergeben, angeordnet an, und sich erstreckend entlang besagter Vorrichtung, **gekennzeichnet** darin, dass:
i) besagte Vorrichtung für die Messung extrudierter Teile, geformt aus Schaumstoff oder ähnlichem Material ist;
ii) besagte Stützmittel umfassen, eine Abwickelmulde (27) beinhalten eine nach oben hin geöffnete Mulde (25);
iii) wobei besagte Felgen von besagten Rollen (20) der Reihe nach ausgerichtet sind in besagter Mulde (25), wobei besagte stützende Oberflächen von besagten Felgen in einer Linie angeordnet sind;
iv) wobei besagte Achsen (22) voneinander beabstandet sind, in einem Abstand, der geringfügig größer ist als der Durchmesser von besagten Rollen (20); und
v) wobei besagte Vorrichtung weiters beinhaltet, eine Skala (30) angefügt an, und sich erstreckend entlang besagter Mulde (25), einen Endstopper (34), an einem Ende von besagter Mulde, für die Indexierung besagter Teile, die darauf angeordnet werden; und einen variabel einstellbaren Stopper (35, 26) welcher entlang besagter Rollen bewegbar ist, in Verbindung mit einem freien Ende von besagtem Teil, und zusammenarbeitend mit besagter Skala (30) um die Länge von besagtem Teil anzuzeigen,
worin die lokalisierte Zugwirkung und Verdichtung auf besagtes Teil egalisiert wird, aufgrund dessen, dass besagtes Teil unabhängig gestützt wird an relativ nahe voneinander beabstandeten Inkrementen, entlang der Länge von besagtem Teil.

2. Eine Vorrichtung, wie definiert in Anspruch 1, worin besagte Mulde (25) ausgebildet ist durch einen Balken (26), welcher eine nach oben hin geöffnete Oberseite aufweist, eine Grundseite und sich gegenüberliegende Seiten (27A, 27B), und
wobei besagte Rollen (20) gestützt sind, in einer Anordnung entlang von besagtem Träger (26), von der Grundseite und den Seiten dessen, in wenigstens drei Reihen (29a, 20b, 20c) von angeordneten Stützrollen für die Begrenzung von besagten länglichen, flexiblen Teilen darin.

3. Ein Verfahren für die Messung der Länge von länglichen, flexiblen Teilen, welche nicht in der Lage sind, sich in einer geraden Linie selbst zu stützen, umfassend:
das Stützen eines Teiles in einer im wesentlichen geraden, horizontalen Position an unabhängigen Stellen, welche entland der Länge von besagtem Teil beabstandet sind, wobei jede Stützstelle zur Verfügung gestellt ist, durch eine frei rotierbare Rolle (20), ausgerichtet entlang der Stützmittel (25, 27), mit Achsen (22), wobei die Achsen (22) von besagten Rollen parallel ausgerichtet sind und jede von besagten Rollen (20) unabhängig beweglich ist, in Bezug zum unmittelbar angrenzenden Oberflächenabschnitt von besagtem Teil, und
dann die Messung der Länge von besagtem Teil,
**gekennzeichnet** darin, dass
i) besagtes Verfahren für die Messung der Länge von flexiblen, extrudierten Teilen ist;
ii) besagte Stützmittel (25, 27) eine Abwickelmulde (27) umfassen;
iii) das Stützen besagten Teiles umfasst, sein Stützen an dicht voneinander beabstandeten Stellen entlang seiner Länge, durch Mittel von besagten Rollen (20), wobei besagte Achsen (22) voneinander beabstandet sind, in einem Abstand, welcher geringfügig größer ist als der Durchmesser von besagten Rollen (20);
iv) besagter Messschritt durchgeführt wird, an besagtem Teil, wobei dieses in einem entspannten Zustand ist,
wobei besagte Rollen es ermöglichen, besagtes Teil lokal zu expandieren oder kontrahieren, aufgrund der Freigabe der Zugwirkung oder der Kompression, welche in besagtem Teil auftritt.

4. Eine Vorrichtung für das Messen der Länge eines länglichen Teiles, welches flexibel ist, so dass es selbst nicht in der Lage ist, sich in einer geraden Linie zu stützen, und der Länge nach elastisch ist, so dass es geneigt ist, sich in seiner Länge zu verändern, umfassend:
ein längliches Stützmittel (25, 27),
eine Vielzahl von Rollen (20), unabhängig voneinander gestützt in besagten Stützmitteln (25, 27), um eine Vielzahl von stützenden Oberflächen entlang der Länge des Teiles zur Verfügung zu stellen,
wobei besagte Rollen frei beweglich sind, und beabstandet sind in der Längsrichtung von besagten Stützmitteln (25, 27),
Stützachsen (22) für besagte Rollen (20),
wobei besagte Achsen (22) sich generell parallel zueinander erstrecken und generell quer zu besagten Stützmitteln (25, 27) angeordnet sind,
wobei besagte Rollen (20) eine Unterstützung zur Verfügung stellen, für besagtes Teil, wenn dieses darauf angeordnet wird, **gekennzeichnet** darin, dass
i) besagte Stützmittel (25, 27) umfassen, eine Abwickelmulde (27) beinhaltend eine nach oben hin geöffnete Mulde (25);
ii) wobei besagte Rollen (20) der Reihe nach und an relativ nahe beabstandeten Intervallen entlang der Länge von besagtem Teil unterstützt sind, und
iii) besagte Vorrichtung weiters beinhaltet, eine Skala (30), angehängt an, und sich erstreckend entlang besagter Mulde (25), und einen Endstopper (34), an einem Ende von besagter Mulde (25), für die Indexierung von besagtem Teil, angeordnet darauf, und einen variabel einstellbaren Stopper (35, 36), beweglich entlang besagter Rollen (20), in Zusammenwirkung mit einem freien Ende von besagtem Teil, und kooperierend mit besagter Skala (30) um die Länge von besagtem Teil anzuzeigen,
wobei besagte Rollen (20) dazu dienen lokale Zugwirkungen und Kompressionen in besagten Teil zu verteilen, wobei besagte Verteilung, welche abhängig ist von besagtem Teil, unabhängig gestützt wird durch relativ dicht voneinander beabstandeten Intervallen entlang der Länge von besagtem Teil.

5. Eine Vorrichtung wie definiert in Anspruch 4, worin besagte Mulde (25) ausgebildet ist durch einen Träger (26), welcher eine nach oben hin offene Oberseite aufweist, eine Grundseite, und sich gegenüberliegende Seiten (27A, 27B), und
besagte Rollen (20) unterstützt sind, in einer Ausrichtung entlang von besagtem Träger, von der Grundseite und den Seiten dessen, in wenigstens drei Reihen (20a, 20b, 20c) für die Begrenzung von besagtem Teil darin.

## Revendications

1. Dispositif pour la mesure de la longueur de pièces flexibles allongées de différentes sections transversales, lesdites pièces étant incapables de se supporter d'elles-mêmes selon une ligne rectiligne, comprenant :
un moyen de support allongé (25, 27) ;
une pluralité de rouleaux (20) ayant des jantes de même diamètre, agencés le long dudit moyen de support pour présenter une série de surfaces de support ; et
des axes de support (22) pour lesdits rouleaux (20) s'étendant à travers les axes de rotation desdits rouleaux correspondants (20),
lesdits axes (22) s'étendant parallèlement les uns par rapport aux autres et transversalement par rapport audit moyen de support (25, 27), de sorte que les surfaces circulaires des jantes desdits rouleaux faisant face vers le haut dans ledit moyen de support forment une partie du support des segments discontinus d'une longueur complète d'une pièce flexible placée dessus et s'étendant le long dudit dispositif, **caractérisé en ce que** :
i) ledit dispositif sert à mesurer des pièces extrudées formées de mousse de caoutchouc ou de matériau semblable ;
ii) ledit moyen de support comprend un berceau (27) comprenant une gouttière ouverte vers le haut (25) ;
iii) lesdites jantes desdits rouleaux (20) sont alignées en série dans ladite gouttière (25), de sorte que lesdites surfaces de support desdites jantes sont agencées en ligne ;
iv) lesdits axes (22) sont espacés séparément avec des écarts légèrement plus grands que le diamètre desdits rouleaux (20) ; et
v) ledit dispositif comprend en outre une graduation (30) attachée à ladite gouttière (25) et s'étendant le long de celle-ci, et une butée d'extrémité (34) à une extrémité de ladite gouttière pour indexer ladite pièce placée dessus, et une butée flottante (35, 36) pouvant se déplacer le long desdits rouleaux pour s'enclencher avec une extrémité libre de ladite pièce et fonctionner en liaison avec ladite graduation (30) pour indiquer la longueur de ladite pièce,
dans lequel la tension et la compression localisées de ladite pièce se dissipent en raison du fait que ladite pièce est supportée indépendamment à des intervalles relativement peu espacés sur sa longeur.

2. Dispositif selon la revendication 1, dans lequel
ladite gouttière (25) est formée par une poutrelle (26) ayant un dessus ouvert vers le haut, un fond, et des côtés opposés (27A, 27B), et
lesdits rouleaux (20) sont supportés et alignés le long de ladite poutrelle (26) depuis le fond et les côtés de celle-ci par au moins trois rangées (20a, 20b, 20c) de supports de rouleaux alignés pour y confiner ladite pièce flexible allongée.

3. Méthode pour mesurer la longueur de pièces flexibles allongées qui sont incapables de se supporter d'elles-mêmes selon une ligne rectiligne, comprenant :
le support d'une pièce dans une position horizontale sensiblement rectiligne à des emplacements indépendants espacés dans la longueur de ladite pièce, chaque emplacement de support étant équipé d'un rouleau capable de tourner librement (20) aligné le long du moyen de support (25, 27), les axes (22) desdits rouleaux étant parallèles, et chacun desdits rouleaux (20) étant capable de se déplacer indépendamment en ce qui concerne les parties de surface adjacentes de ladite pièce, et
la mesure de la longueur de ladite pièce, **caractérisée en ce que** :
i) ledit procédé sert à mesurer la longueur de pièces flexibles extrudées ;
ii) ledit moyen de support (25, 27) comprend un berceau (27) ;
iii) le support de ladite pièce comprend son support à des emplacements peu espacés sur sa longueur au moyen desdits rouleaux (20), dont lesdits axes (22) sont espacés séparément avec des écarts légèrement plus grands que le diamètre desdits rouleaux (20) ; et
iv) ladite étape de mesure est réalisée avec ladite pièce se trouvant dans son état relâché,
de sorte que lesdits rouleaux permettent à ladite pièce de se détendre ou de contracter localement en raison du fait que la tension ou la compression localisée dans ladite pièce se relâche.

4. Procédé pour mesurer la longueur d'une pièce allongée présentant une flexibilité la rendant incapable de se supporter d'elle-même selon une ligne rectiligne, et présentant une élasticité longitudinale la rendant encline aux changements de longueur, comprenant :
un moyen de support allongé (25, 27),
une pluralité de rouleaux (20) supportés indépendamment dans ledit moyen de support (25, 27) pour présenter une pluralité de surfaces de support le long de la pièce, lesdits rouleaux étant capables de tourner librement, et espacés séparément dans la direction longitudinale dudit moyen de support (25, 27),
des axes de support (22) pour lesdits rouleaux (20),
lesdits axes (22) s'étendant généralement parallèlement les uns par rapport aux autres et généralement transversalement audit moyen de support (25, 27),
de sorte que lesdits rouleaux (20) forment le support pour ladite pièce quand elle est placée dessus, **caractérisé en ce que** :
i) ledit moyen de support (25, 27) comprend un berceau (27) muni d'une gouttière ouverte vers le haut (25) ;
ii) lesdits rouleaux (20) sont supportés en série et à des intervalles relativement peu espacés le long de la longueur de ladite pièce ; et
iii) ledit dispositif comprend en outre une graduation (30) attachée à ladite gouttière (25) et s'étendant le long de celle-ci, et une butée d'extrémité (34) à une extrémité de ladite gouttière (25) pour indexer ladite pièce placée dessus, et une butée flottante (35, 36) pouvant se déplacer le long desdits rouleaux (20) pour s'enclencher avec une extrémité libre de ladite pièce et fonctionner en liaison avec ladite graduation (30) pour indiquer la longueur de ladite pièce,
de sorte que lesdits rouleaux (20) servent à dissiper la tension et la compression localisées dans ladite pièce, une telle dissipation étant due au fait que ladite pièce est supportée indépendamment à des intervalles relativement peu espacés sur sa longueur.

5. Dispositif selon la revendication 4, dans lequel
ladite gouttière (25) est formée par une poutrelle (26) ayant un dessus ouvert vers le haut, un fond et des côtés opposés (27A, 27B), et
lesdits rouleaux (20) sont supportés et alignés le long de ladite poutrelle depuis le fond et les côtés de celle-ci en au moins trois rangées (20a, 20b, 20c) pour y confiner ladite pièce.
